Europäisches Patentamt

European Patent Office

Office européen des brevets

(11) Veröffentlichungsnummer: **0 257 128**
**A1**

## (12) EUROPÄISCHE PATENTANMELDUNG

(21) Anmeldenummer: 86111813.1

(22) Anmeldetag: 26.08.86

(51) Int. Cl.4: **C04B 28/26** , C04B 28/06 , C04B 7/32 , C04B 12/04 , //(C04B28/26,22:00),(C04B28/0-6,22:00)

(43) Veröffentlichungstag der Anmeldung:
02.03.88 Patentblatt 88/09

(84) Benannte Vertragsstaaten:
AT BE CH DE FR GB IT LI LU NL SE

(71) Anmelder: **Kernforschungszentrum Karlsruhe GmbH**
**Weberstrasse 5 Postfach 3640**
**D-7500 Karlsruhe 1(DE)**

Anmelder: **Woellner WerkeGmbH & Co.**
**Postfach 211 469**
**D-6700 Ludwigshafen/Rhein(DE)**

(72) Erfinder: **Vejmelka, Peter, Dr.**
**Otto-Hahn-Strasse 8**
**D-7514 Leopoldshafen(DE)**
Erfinder: **Köster, Rainer, Dr.**
**Am Kirchberg 25**
**D-7500 Karlsruhe-Grötzingen(DE)**
Erfinder: **Droll, Klaus, Dr.**
**Rehbachstrasse 40**
**D-6708 Neuhofen(DE)**

(74) Vertreter: **Gottlob, Peter**
**Kernforschungszentrum Karlsruhe GmbH**
**Stabs. Patente und Lizenzen Weberstrasse 5**
**D-7500 Karlsruhe 1(DE)**

(54) Selbsthärtende Mischung zur Erzielung chemisch resistenter Materialien.

(57) Selbsthärtende Mischung zur Erzielung chemisch resistenter Materialien mit hoher Früh-und Endfestigkeit auf Basis einer Kombination von wasserlöslichen Silikaten (Komponente 1) und Calcium-Aluminaten oder Aluminatzementen mit oder ohne Zuschlagsstoffen (Komponente 2) und Wasser.

In der ersten Erhärtungsphase der Mischung aus den Komponenten 1 und 2 wird festes, reaktionsfähiges Calciumhydroxid $Ca(OH)_2$ in einer Menge, die im Bereich zwischen 0,1 Gew.-% und 10 Gew.-% der Trockenmasse der Summe aus den Komponenten 1 und 2 ohne Zuschlagsstoffe liegt, zugesetzt.

## Selbsthärtende Mischung zur Erzielung chemisch resistenter Materialien.

Die Erfindung betrifft eine selbsthärtende Mischung zur Erzielung chemisch resistenter Materialien mit hoher Früh-und Endfestigkeit auf Basis einer Kombination von wasserlöslichen Silikaten (Komponente 1) und Calcium-Aluminaten oder Aluminatzementen mit oder ohne Zuschlagstoffen (Komponente 2) und Wasser.

Betone werden generell als in keiner Weise säurebeständig bezeichnet. Zementstein zersetzt sich z. B. in Salzsäure unter Bildung von Calciumchlorid, Aluminium-und Eisenchlorid sowie Kieselsäure vollständig. Ähnliches gilt auch für die meisten anderen Säuren; die wenigen Ausnahmen sind Oxalsäure, Weinsäure und Kieselfluorwasserstoffsäure. Letztere dient zur Betonkonservierung, dem sogenannten Fluatieren.

Aus diesen Gründen wurden überall dort, wo Bauteile einer chemischen Belastung ausgesetzt werden, chemisch beständige, insbesondere säurefeste Beschichtungen etc. erforderlich. Hierzu wurden säurefeste Kitte als Mörtel für Vermauern, Verlegen und Ansetzen von säurefesten, hauptsächlich keramischen Steinen und Platten, ferner zum Verfugen derartiger Plattenbeläge und in Einzelfällen auch für die Verputze und Überzüge bekannt. Selbsterhärtende Säurekitte, wie z. B. Wasserglaskitte, besitzen wie andere moderne Baumörtel die Eigenschaft des in sich selbst Erhärtens. Die Verwendung von silikatgebundenen Materialien für solche Zwecke sind schon lange bekannt. Die genannten Materialien besitzen jedoch den Nachteil, daß sie geringe chemische Stabilität im neutralen und alkalischen Bereich aufweisen, sowie daß sie für zahlreiche Einsatzzwecke nur eine unbefriedigende mechanische Festigkeit erreichen.

Bei Zusatz von wasserlöslichen Silikaten zur Beschleunigung des Abbindevorgangs bei Portland-Zementen werden zwar hohe Frühfestigkeiten erreicht, aber aus verarbeitungstechnischen Gründen, beispielsweise wegen der sofortigen Erhärtung, ist die Menge der einzubringenden wasserlöslichen Silikate derart begrenzt, daß sich keine befriedigende Säurebeständigkeit erzielen läßt. Bei Einsatz von Aluminatzementen gestattet zwar die verlängerte Aushärtezeit solcher Mischungen die Verwendung wasserlöslicher Silikate in einer ausreichend hohen Menge, um chemisch beständige Materialien zu erhalten, aber sowohl die Früh-als auch die Endfestigkeit solcher Materialien ist für viele Einsatzzwecke unbefriedigend.

Aufgabe der Erfindung war es, einen Mörtel bzw. eine selbsthärtende Mischung anorganischer Substanzen bereitzustellen, die während des Erhärtens mit guter Verarbeitbarkeit zu Erzeugnissen führt, welche
-technische Eigenschaften vergleichbar mit solchen von Betonen oder Mörtel aufweisen,
-auf ihre anwendungsbezogene Umgebung, z. B. auf Baustahl, nicht korrodierend wirken,
-selbst chemisch resistent, insbesondere säurebeständig sind,
-und in einem weiten Anwendungsbereich brauchbar sind.

Die Aufgabe wird erfindungsgemäß dadurch gelöst, daß in der ersten Erhärtungsphase der Mischung aus den Komponenten 1 und 2 festes, reaktionsfähiges Calciumhydroxid $Ca(OH)_2$ in einer Menge, die im Bereich zwischen 0,1 Gew.-% und 10 Gew.-% der Trockenmasse der Summe aus den Komponenten 1 und 2 ohne Zuschlagstoffe liegt, zugesetzt wird.

Als wasserlösliche Silikate werden hauptsächlich Natrium-und/oder Kaliumsilikate verwendet. Zu Natrium-und/oder Kaliumsilikat können zusätzlich Ammonium-und/oder Lithiumsilikat verwendet werden. In einer besonderen Ausführung der erfindungsgemäßen Mischung beträgt das Mol-Verhältnis $SiO_2$ zu $M_2O$ der Silikate zwischen 1,0 und 4,0, wobei $M_2O$ der Anteil des Metalloxids im Silikat bedeutet. Vorteilhafterweise liegt das Massenverhältnis des Silikatanteils zum Zementanteil, jeweils bezogen auf die wasserfreien Anteile der Mischung der beiden Komponenten, zwischen 0,1 und 10,0, vorzugsweise jedoch zwischen 0,2 und 0,5. Die Menge des zugesetzten $Ca(OH)_2$ liegt vorteilhafterweise im Bereich zwischen 0,1 Gew.-% und 4 Gew.-%, bezogen auf die Trockenmasse der Summe aus den Komponenten 1 und 2 ohne Zu-schlagstoffe. Vorteilhafte Weiterbildungen der erfindungsgemäßen Mischung sind gekennzeichnet durch weitere Zusätze aus der Gruppe Beschleuniger oder Verzögerer, Verflüssigungs-oder Verdickungsmittel, Hydrophobierungsmittel, Haftvermittler, Luftporenbildner, Pigmente und Modifizierungsmittel. Die erfindungsgemäße Mischung kann verwendet werden zur Herstellung chemisch beständiger Formkörper, Beschichtungen, Verfüllungen oder Injektionskörper nach Verpressungen.

Die Vorteile der Erfindung liegen u. a. darin, daß eine hohe Frühfestigkeit und eine hohe Endfestigkeit ohne thermische oder chemische Nachbehandlung nach dem Erhärten der Mischung erzielt wird und daß die Mischung sich mit den herkömmlichen bautechnischen Verfahren verarbeiten läßt.

Die Erfindung wird im folgenden anhand von Ausführungsbeispielen näher beschrieben.

Beispiel 1:

Vergleich der Druckfestigkeiten vergleichbarer Mischungen.

Es wurden folgende Vergleichsmischungen angesetzt:

Mischung I (nicht zur Erfindung gehörig):

Aluminatzement (kommerziell erhältlicher Tonerdeschmelzzement) 20 Gew.-%
Natriumsilikatlösung (Feststoffgehalt 32,5 %, Mol-Verhältnis $SiO_2$ zu $Na_2O$ = 3,0) 20 Gew.-%
Quarzsand (Größtkorn 1 mm) Rest zu 100 %.

Mischung II (erfindungsgemäße Mischung):

Aluminatzement 20,0 Gew.-%
Natriumsilikatlösung (Feststoffgehalt 32,5 %, Mol-Verhältnis $SiO_2$ zu $Na_2O$ = 3,0) 20,0 Gew.-%
Calciumhydroxid (Weißkalkhydrat) 0,6 Gew.-%
Quarzsand (Größtkorn 1 mm) Rest zu 100 %.

Aus beiden Mischungen wurden in Anlehnung an die DIN 1164 Prismen mit den Maßen 2 cm x 2 cm x 8 cm hergestellt, verdichtet, nach einstündiger Aushärtezeit in den Formen entschalt und unter wasserdampfgesättigter Atmosphäre bzw. unter relativer Luftfeuchtigkeit 40 bis 50 % bei jeweils 18 bis 22° C gelagert. Die Anzahl der Prismen war so bemessen, daß je Messung 3 unter gleichen Bedingungen gelagerte Prismen zur Verfügung standen. Nach den in der folgenden Tabelle 1 angegebenen Lagerungszeiten wurden die Druckfestigkeiten bestimmt. In Tabelle 1 sind Mittelwerte von jeweils 3 gleichbehandelten Proben für jede Meßbedingung angegeben.

**Tabelle 1**

Druckfestigkeiten in N/mm²

| nach | Mischung I | | Mischung II | |
|---|---|---|---|---|
| | 100 % rel.LF | 40-50 % rel.LF | 100 % rel.LF | 40-50 % rel.LF |
| 1 Stunde (direkt nach der Ausschalung) | 2,5 | | 3,1 | |
| 4 Stunden | 3,1 | 3,2 | 6,2 | 6,3 |
| 1 Tag | 5,3 | 6,8 | 18,5 | 22,7 |
| 3 Tage | 6,8 | 13,1 | 39,7 | 40,9 |
| 1 Woche | 7,0 | 16,8 | 40,1 | 45,7 |
| 1 Monat | 11,3 | 16,6 | 47,2 | 46,4 |

Aus der Tabelle 1 ist erkennbar, daß die Druckfestigkeiten der Mischung II jeweils im Bereich zwischen dem Doppelten und dem Dreifachen der Werte für die Mischung I nach vier Stunden Lagerzeit oder mehr liegen.

Beispiel 2:

Vergleich von Druckfestigkeiten

Es wurden folgende Mischungen hergestellt:

Mischung III

Aluminatzement 50 %
Natriumsilikatlösung (wie in Mischung I) 50 %

Mischung IV

Aluminatzement 49,2 %
Natriumsilikatlösung (wie in Mischung I) 49,2 %
Calciumhydroxid (z. B. Weißkalkhydrat) 1,6 %

Mischung V

Aluminatzement 48,8 %
Natriumsilikatlösung (wie in Mischung I) 48,8 %
Calciumhydroxid (z. B. Weißkalkhydrat) 2,4 %
Die Versuchsbedingungen waren die gleichen wie in Beispiel 1 beschrieben.

Tabelle 2:

Druckfestigkeiten in N/mm²

| nach | Mischung III | | Mischung IV | | Mischung V | |
|---|---|---|---|---|---|---|
| | 100 % rel.LF | 40-50 % rel.LF | 100 % rel.LF | 40-50 % rel.LF | 100 % rel. LF | 40-50 % rel.LF |
| 1 Stunde (direkt nach der Ausscha- lung) | 1,8 | | 2,2 | | 2,0 | |
| 4 Stunden | 2,1 | 2,3 | 2,9 | 3,4 | 2,8 | 3,0 |
| 1 Tag | 3,0 | 6,0 | 12,0 | 12,6 | 17,0 | 17,6 |
| 2 Tagen | 4,3 | 8,3 | 18,3 | 14,9 | 35,0 | 28,4 |
| 8 Tagen | 6,3 | 27,8 | 45,3 | 45,0 | 42,5 | 36,7 |

Auch bei den Mischungen IV und V, welche ohne Sand als Zuschlagstoff hergestellt wurden, waren wesentlich verbesserte Druckfestigkeiten bei den aus den erfindungsgemäßen Mischungen hergestellten Prismen nachweisbar.

Beispiel 3:

Prüfung auf chemische Beständigkeit von erhärteten Proben aus Mischung II (angegebene %-Werte = Gew.-%).

Probekörper (Prismen 2 cm x 2 cm x 8 cm) wurden nach der Herstellung 7 Tage bei Raumtemperatur (18 - 22° C) und 40 -50 % relativer Luftfeuchtigkeit gelagert (Ausgangsdruckfestigkeit 45,7 N/mm²) und dann bei Raumtemperatur in 1 %iger und 20 %iger Schwefelsäure und in 1 %iger und 10 %iger Natronlauge ausgelagert. Zum Vergleich wurden Proben in Wasser zugelagert. In Tabelle 3 sind die Ergebnisse der Druckfestigkeitsmessungen in Abhängigkeit von der Auslagerungszeit angegeben.

Die Proben aus Mischung II zeigten am Ende der Auslagerungsperiode sowohl in Schwefelsäure, in Natronlauge als auch in Wasser gute Formbeständigkeit sowie praktisch keine Erniedrigung der Druckfestigkeit.

Unter vergleichbaren Auslagerungsbedingungen waren mit Portlandzement oder Hochofenzement als Bindemittel hergestellte Probekörper in Schwefelsäure innerhalb eines Tages zerstört. Proben, die unter Verwendung von Wasserglas als alleinigem Bindersystem hergestellt wurden, wiesen zwar eine gute Säurebeständigkeit, jedoch nur geringe Druckfestigkeiten auf und wurden bei Lagerungen in Natronlauge innerhalb kurzer Zeit zerstört.

**Tabelle 3**

Druckfestigkeit in N/mm²

| in | 1 % $H_2SO_4$ | 20 % $H_2SO_4$ | 1 % NaOH | 10 % NaOH | $H_2O$ |
|---|---|---|---|---|---|
| nach 1 Tag | 44.6 | 42.3 | 49.9 | 47.7 | 46,5 |
| 7 Tagen | 42.8 | 44.4 | 46.9 | 56.6 | 41,0 |
| 28 Tagen | 44.9 | 43.2 | 49.9 | 56.4 | 42,2 |

## Ansprüche

1. Selbsthärtende Mischung zur Erzielung chemisch resistenter Materialien mit hoher Früh-und Endfestigkeit auf Basis einer Kombination von wasserlöslichen Silikaten (Komponente 1) und Calcium-Aluminaten oder Aluminatzementen mit oder ohne Zuschlagstoffen (Komponente 2) und Wasser, dadurch gekennzeichnet, daß in der ersten Erhärtungsphase der Mischung aus den Komponenten 1 und 2 festes reaktionsfähiges Calciumhydroxid $Ca(OH)_2$ in einer Menge, die im Bereich zwischen 0,1 Gew.-% und 10 Gew.-% der Trockenmasse der Summe aus den Komponenten 1 und 2 ohne Zuschlagstoffe liegt, zugesetzt wird.

2. Mischung nach Anspruch 1, dadurch gekennzeichnet, daß als wasserlösliche Silikate Natrium- und/oder Kaliumsilikate verwendet werden.

3. Mischung nach Anspruch 2, dadurch gekennzeichnet, daß zusätzlich zu Natrium-und/oder Kaliumsilikat Ammonium-und/oder Lithium-Silikat verwendet werden.

4. Mischung nach Anspruch 1, dadurch gekennzeichnet, daß das Molverhältnis $SiO_2 : M_2O$ der Silikate zwischen 1,0 und 4,0 beträgt, wobei $M_2O$ der Anteil des Metalloxids im Silikat bedeutet.

5. Mischung nach Anspruch 1, dadurch gekennzeichnet, daß das Massenverhältnis des Silikatanteils zum Zementanteil, jeweils bezogen auf die wasserfreien Anteile der Mischung der beiden Komponenten, zwischen 0,1 und 10,0 liegt.

6. Mischung nach Anspruch 1, dadurch gekennzeichnet, daß das Massenverhältnis des Silikatanteils zum Zementanteil, jeweils bezogen auf die wasserfreien Anteile der Mischung der beiden Komponenten, zwischen 0,2 und 0,5 liegt.

7. Mischung nach Anspruch 1, dadurch gekennzeichnet, daß die Menge des zugesetzten $Ca(OH)_2$ im Bereich zwischen 0,1 Gew.-% und 4 Gew.-%, bezogen auf die Trockenmasse der Summe aus den Komponenten 1 und 2 ohne Zuschlagstoffe, liegt.

8. Mischung nach einem der voranstehenden Ansprüche, gekennzeichnet durch weitere Zusätze aus der Gruppe Beschleuniger oder Verzögerer, Verflüssigungs-oder Verdickungsmittel, Hydrophobierungsmittel, Haftvermittler, Luftporenbildner, Pigmente und Modifizierungsmittel.

9. Verwendung der Mischung nach Anspruch 1 zur Herstellung chemisch beständiger Formkörper, Beschichtungen, Verfüllungen oder Injektionskörper nach Verpressungen.

Europäisches
Patentamt

**EUROPÄISCHER RECHERCHENBERICHT**

Nummer der Anmeldung

EP 86 11 1813

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 730 304 (L.J.BILLE) <br><br> * Seite 1, Zeilen 1-12; Seite 2, Beispiel 2 * <br><br> --- | 1,2,5, 8,9 | C 04 B 28/26 <br> C 04 B 28/06 <br> C 04 B 7/32 <br> C 04 B 12/04 // <br> (C 04 B 28/26 <br> C 04 B 22:00 ) |
| X | FR-A- 972 889 (L.J.BILLE) <br><br> * Beispiel 2 * <br><br> --- | 1,2,8, 9 | (C 04 B 28/06 <br> C 04 B 22:00 ) |
| X | CHEMICAL ABSTRACTS, Band 90, Nr. 20, Mai 1979, Seite 242, Nr. 156143t, Columbus, Ohio, US; & SU-A-643 466 (KUCHERENKO, V.A., CENTRAL SCIENTIFIC-RESEARCH INSTITUTE OF BUILDING STRUCTURES) 25.01.1979 <br> * Zusammenfassung * <br><br> --- | 1,3,5, 8,9 | |
| A | EP-A-0 189 928 (C.M.MARNER) <br><br> * Patentansprüche 1,9 * <br><br> ----- | | RECHERCHIERTE SACHGEBIETE (Int. Cl.4) <br><br> C 04 B 28/00 |

Der vorliegende Recherchenbericht wurde für alle Patentansprüche erstellt.

| Recherchenort | Abschlußdatum der Recherche | Prüfer |
|---|---|---|
| DEN HAAG | 23-04-1987 | DAELEMAN P.C.A. |